# EUROPÄISCHE PATENTSCHRIFT

(11) **EP 0 585 272 B1**
(45) Veröffentlichungstag und Bekanntmachung des Hinweises auf die Patenterteilung: **11.10.1995**
(21) Anmeldenummer: 92909656.8
(22) Anmeldetag: 09.05.1992
(51) Int. Cl.: B05C 21/00

(54) **ABKLEBEPROFIL ZUM EINSATZ BEI LACKIERARBEITEN VON FAHRZEUGKARROSSERIEN**
MASKING PLATE FOR USE IN SPRAYING VEHICLE BODYWORK
PLAQUE DE MASQUAGE UTILISEE LORS DE LA PEINTURE DE CARROSSERIES DE VEHICULES

(30) Priorität: 18.05.1991 DE 9106206 U; 19.07.1991 DE 4123964
(43) Veröffentlichungstag der Anmeldung: 09.03.1994
(73) Patentinhaber: Ribic, Harald, Jun., D-44379 Dortmund (DE)
(72) Erfinder: Ribic, Harald, Jun., D-44379 Dortmund (DE)
(74) Vertreter: Patentanwälte Meinke, Dabringhaus und Partner
(86) Internationale Anmeldenummer: EP9201021
(87) Internationale Veröffentlichungsnummer: WO9220461

(56) Entgegenhaltungen:
- DE-A- 2 746 502
- DE-U- 8 513 902
- US-A- 2 922 392
- US-A- 2 959 152
- US-A- 4 263 355

## Beschreibung

Die Erfindung richtet sich auf ein Abklebeprofil zum Einsatz bei Lackierarbeiten der im Oberbegriff des Anspruches 1 angegebenen Gattung.

Ein gattungsgemäßes Abklebeprofil ist aus der US-4 263 355 bekannt, welches einen leicht angewinkelten, kurzen Schutzschenkel und einen deutlich längeren Abdeckschenkel aufweist, der zum bereichsweisen Verkleben an einer Unterlage mit seinem außenrandseitigen Bereich vorgesehen ist. Die Vorwinklung des kurzen Steges kann dabei über eine Kerbe mit einer Art Filmscharnier vorgenommen werden oder sie ist werkseitig bereits eingeprägt.

Bei Lackierarbeiten von Kraftfahrzeugen müssen nicht zu lackierende Bereiche, insbesondere Dichtprofile, die Übergangsprofile zwischen Karosserie und eingesetzten Scheiben u. dgl. abgeklebt werden, um sie vor der Benetzung mit Farbe zu schützen. Zum Schutz von Reifen, etwa bei Lackierarbeiten von Felgen, sind Lackierschablonen beispielsweise aus der US-2 954 752 oder dem DE-85 13 902-U bekannt. Eine abnehmbare, eine Scheibe schützende Maske als großflächiges Element zeigt die US-4 915 058, während eine Abdeckmaske für einen Schriftzug, der nicht mit Farbe versehen werden soll, aus der US-2 959 152 bekannt ist. Eine mit einer umlaufenden Kante versehene flächige Schutzschablone für in Gummiprofilen eingebettete Scheiben zeigt die US-2 922 392.

Bei modernen Fahrzeugen ist es üblich, gerade Front- und Heckscheiben in vergleichsweise eigensteifen Profilen unmittelbar mit der Karosserie zu verkleben. Um hier Lackierarbeiten vorzunehmen, müssen die Übergangsbereiche zwischen Karosserie und Scheibendichtrahmen abgeklebt werden, was mit üblichen Abklebeprofilen etwa nach der DE-27 46 502-A aufwendig und zum Teil nicht möglich ist, da Bereiche des Scheibenprofiles hintergriffen und von Karosserieflächen zum Lackieren abgehoben werden müssen.

Ein besonderes Problem der Lackierarbeiten bei Kraftfahrzeugen besteht darin, daß die die Scheiben einfassenden Profile häufig aus vergleichsweise festem Werkstoff gebildet sind, so daß es nötig ist, zum Abheben der Dichtlippen vergleichsweise hohe Kräfte aufzuwenden.

Aufgabe der Erfindung ist daher die Schaffung einer Lösung, mit der die an den zu spritzenden Blechteilen anliegenden Profilbereiche von Scheibenprofilen von Kraftfahrzeugscheiben in einfacher Weise für Lackierarbeiten abgehoben und abgeklebt werden können.

Mit einem Abklebeprofil der eingangs bezeichneten Art wird diese Aufgabe gemäß der Erfindung durch die kennzeichnenden Merkmale des Hauptanspruches gelöst.

Mit dem erfindungsgemäßen Abklebeprofil ist es möglich, hinter die Dichtlippen an den Scheibenprofilen zu greifen und diese von der zu lackierenden Karosseriefläche abzuheben und in der abgehobenen Stellung zu fixieren, die auftretenden Kräfte können durch die verklebung über einen längeren Schenkel aufgebracht werden.

Für allgemeine Lackier- oder Malarbeiten sind teilgewinkelte oder abwinkelbare Profile bekannt, so beispielsweise aus der US-4 398 495 oder aus der eingangs schon genannten US-4 263 355, die aber für das Einsatzgebiet der vorliegenden Erfindung nicht geeignet sind. Die kleine Bruch- oder Knickkante beim Profil nach der US-4 263 355 vermag die bei Kraftfahrzeugscheibenprofilen auftretenden Rückstellkräfte nicht aufzufangen.

In Ausgestaltung ist nach der Erfindung vorgesehen, daß Bereiche des zur Verklebung dienenden Profilschenkels entfernt sind, was den Vorteil hat, daß das Profil trotz seiner gewünschten Eigensteifigkeit auch um Ecken herum zur Verklebung eingesetzt werden kann. Um eine Kurvengängigkeit eines Flachmateriales zu ermöglichen, zeigt die DE-A-27 26 205 Schlitze und Kerben in einem Teilbereich des Abklebebandes. Eine Entfernung von Profilbereichen um ein Winkelprofil in einer Kurve anzubringen, ist dieser Literaturstelle nicht zu entnehmen.

Um die Handhabung zu erleichtern, ist erfindungsgemäß vorgesehen, daß wenigstens der zum Hintergreifen der Profildichtlippen eingesetzte Profilschenkel an seinem Ende sich verjüngend ausgebildet ist, wobei auch in Ausgestaltung vorgesehen sein kann, daß die Schenkel, ausgehend von der Winkelecke, sich zu den freien Enden hin verjüngend ausgebildet sind. Bei einem Abklebeprofil für Chromschriftzüge auf Fahrzeugen nach der US-A-2 959 152 ist es bekannt, die freien Randkanten zugespitzt auszubilden.

Um die auftretenden Kräfte optimal auffangen zu können, ist erfindungsgemäß vorgesehen, daß der mit der Klebstoffbeschichtung versehene Schenkel wenigstens 1,2-fach, insbesondere mehr als 3-fach breiter ausgebildet ist als der Schenkel.

In der Praxis können solche Elemente beispielsweise 20 cm lang sein, sie können seitlich von den Eckbereichen aus unter die Scheibenprofile nacheinander geschoben werden und bilden im Endabklebebereich dann ein dichtes umlaufendes Abklebeprofil. Die Kurzelemente können dem Verbraucher in Bündeln zur Verfügung gestellt werden, so daß die Handhabung wenigstens so leicht ist, als sei das Profil etwa auf einer Rolle oder als Band, wie im Stand der Technik bekannt, aufgewickelt.

Die Erfindung ist nachstehend anhand der Zeichnung beispielsweise näher erläutert. Diese zeigt in
- Fig. 1: einen Querschnitt durch den Übergangsbereich zwischen einer einklebten Scheibe und der Karosserie mit noch nicht eingestecktem Abklebeprofil,
- Fig. 2: den gleichen Querschnitt mit dem Abklebeprofil in der Gebrauchslage,
- Fig. 3: die räumliche Darstellung eines insbesondere für Ecken einzusetzenden Abkleprofiles,
- Fig. 4 und 5: unterschiedliche Querschnittsformen des Abklebeprofiles,
- Fig. 6: eine Aufsicht auf einen der Profilschenkel des Abklebeprofiles mit unterschiedlich gestalteten Ausnehmungen sowie in
- Fig. 7: die vereinfachte räumliche Aufsicht auf einen Eckbereich eines abgeklebten Scheibenprofiles.

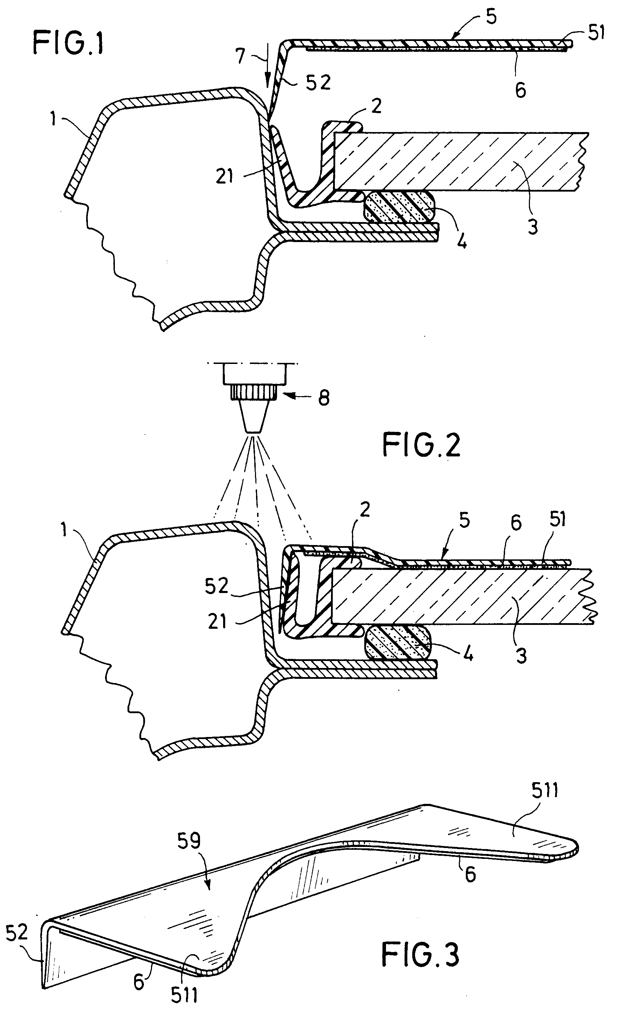

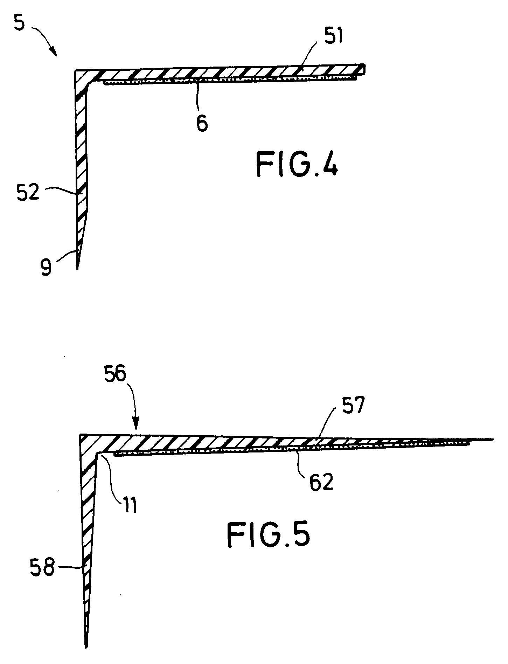

Um einen mit 1 bezeichneten Karosseriebereich lackieren zu können, der mit einem Dichtrahmen 2 für eine mit einem Klebeprofil 4 verklebte Windschutzscheibe 3 versehen ist, wird ein allgemein mit 5 bezeichnetes Abklebeprofil nach der Erfindung in Richtung des Pfeiles 7 (Fig. 1) hinter die mit 21 bezeichnete Lippe des Dichtrahmens 2 eingesteckt. Das Abklebeprofil 5 ist hier querschnittlich L-förmig ausgebildet mit einem Profilschenkel 51, der auf seiner Innenseite mit einer Klebstoffbeschichtung 6 versehen ist, und einem L-Schenkel 52, dessen vorderer Bereich 9 (Fig. 4) zur Bildung einer Spitze verjüngt ausgebildet ist.

Mit diesem vorderen Bereich 9 wird das Profil hinter die Lippe 21 eingeschoben und seitlich geringfügig versetzt auf das Windschutzscheibenprofil 2 aufgeklebt, derart, daß sich die Lippe 21 geringfügig vom Blech abhebt, wie dies in Fig. 2 dargestellt ist. Nunmehr kann mit dem Sprühkopf 8, der in Fig. 2 andeutungsweise wiedergegeben ist, der Lack aufgesprüht werden. Durch das Abdeckprofil 5 ist es möglich, daß Lacknebel an den mit 1a bezeichneten Karosseriebereich kommt, der in der Gebrauchslage von der Lippe 21 des Profiles 2 überdeckt wird.

Wird nach Beendigung der Lackierarbeiten das Profil 5 abgezogen, legt sich die Lippe 21 über die sich gebildete Kante des Lackes, so daß das Lackierungsergebnis immer sauber und gratfrei ist.

Um insbesondere die Ecken der Dichtrahmen an den Scheiben von den Karosseriebereichen abheben zu können, besteht eine für die Erfindung besonders zweckmäßige Gestaltung in einem Kurzprofil 59, wie es in Fig. 3 dargestellt ist. Dieses Kurzprofil 59 ist vergleichsweise eigensteif ausgebildet und weist, wie oben schon beschrieben, einen Profilschenkel 52 zum Hintergreifen der Dichtlippe 21 am Profilrahmen 2 auf und zwei Profillappen 511, die durch eine größere Innenaussparung gebildet sind, wie sich dies aus Fig. 3 und auch aus Fig. 8 ergibt. Damit ist es möglich, das Abklebeprofil 59 um die Ecke eines Dichtrahmens 2 herumzuführen.

Zweckmäßig sind die Abklebeprofile 5 als Kurzstücke ausgebildet, derart, daß sie seitlich hinter die Dichtlippe 21 des Dichtrahmens 2 eingeschoben werden können, was die Montage der Abklebeprofile 5 stark vereinfacht, diese Kurzstücke sind mit Ausnahme der Fig. 3 ansonsten in den Figuren nicht näher dargestellt.

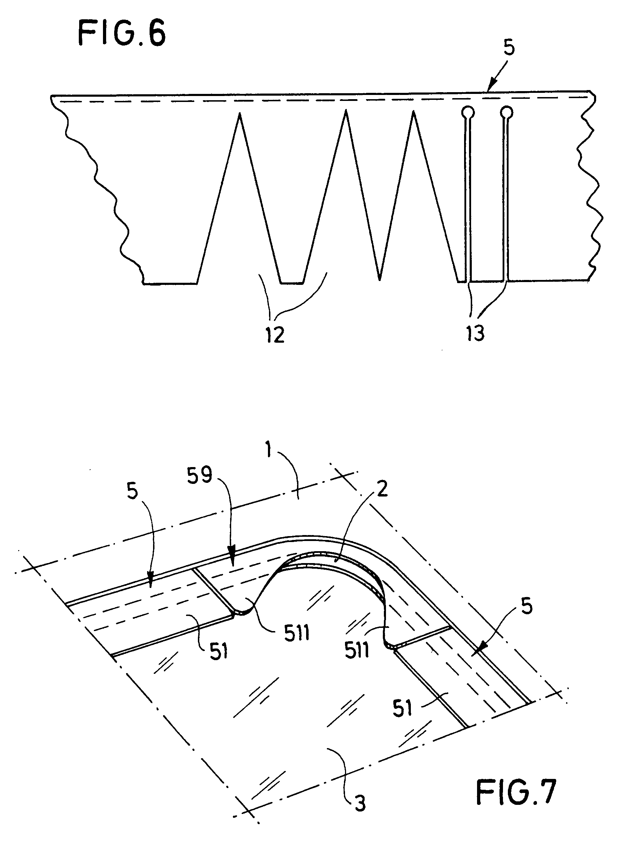

Um die Handhabung ggf. zu erleichtern, kann das Profil auch in der in Fig. 5 wiedergegebenen Weise gestaltet sein. Dort ist der mit der Klebebeschichtung 62 versehene Schenkel 57 etwa doppelt so lang ausgebildet, wie der klebstoffbeschichtungsfreie Schenkel 58.

In Fig. 5 ist auch dargestellt, daß die Schenkel 57 bzw. 58, ausgehend von der Winkelecke, sich gleichmäßig verjüngend ausgebildet sein können. Dies ist insbesondere zweckmäßig um Material einzusparen und um ggf. die Wickelbarkeit auf Rollen dadurch zu erleichtern, daß neben der Streifenecke die Restbereiche des Profiles, insbesondere desjenigen mit Klebstoffbeschichtung, vergleichsweise flexibel ausgebildet sind.

Eine andere als die oben bereits beschriebene Art leichter Krümmungen und Kurven mit dem Profil 5 überdecken zu können, besteht darin, Kerben 12 oder Schlitze 13 in wenigstens einen Schenkel einzubringen, wie dies in Fig. 6 dargestellt ist. Diese Kerben 12 bzw. Schlitze 13 können bereits werkseitig vorgesehen sein. Eine Möglichkeit nach der Erfindung besteht aber auch darin, dem Benutzer ein hierzu eigens angepaßtes Werkzeug zur Verfügung zu stellen, derart, daß er die Schlitze bzw. Kerben unmittelbar während des Abklebevorganges an den Stellen einbringen kann, an denen er sich benötigt.

Natürlich sind die beschriebenen Ausführungsbeispiele der Erfindung noch in vielfacher Hinsicht abzuändern, ohne den Grundgedanken zu verlassen. So kann beispielsweise der nicht mit einer Klebstoffbeschichtung versehene Schenkel auch in bezug auf die Innenwinkelecke 11 in einem spitzen Winkel auf den anderen Schenkel 51 weisend gestaltet sein. Im extremsten Falle können in der Verpackung in der Transport- und Verpackungslage die Schenkel 51 und 52 flach aufeinanderliegen, sie werden dann vom Benutzer etwa in Richtung der L-Form aufgebogen, wobei die Winkelecke dann werkseitig so gestaltet sein kann, etwa durch entsprechende Materialanhäufung, daß ein bestimmter gewünschter Winkel, der im Extremfalle dem rechten Winkel entsprechen kann, nicht überschritten wird.

## Patentansprüche

1. Abklebeprofil zum Einsatz bei Lackierarbeiten am Übergangsbereich von in Profilen (2) eingebetteten Kraftfahrzeugscheiben(3) zur Kraftfahrzeugkarosserie (1),
dadurch gekennzeichnet,
daß das Abklebeprofil (5) als eigensteifes Kurzelement mit zwei im Querschnitt zueinander L-förmig im Winkel stehenden Profilschenkeln (51,52) ausgebildet ist, einem kürzeren Profilschenkel (52) zum Hintergreifen der an dem zu lackierenden Karosseriebereich (1) anliegenden Lippe (21) des die Fahrzeugscheibe (3) einfassenden Profiles (2) und einem längeren Profilschenkel (51) mit einer Klebebeschichtung (6) zum Verkleben auf der Außenoberfläche der Fahrzeugscheibe (3) und/oder auf Karosserieflächen.

2. Abklebeprofil nach Anspruch 1,
dadurch gekennzeichnet,
daß Bereiche des zur Verklebung dienenden Profil Schenkels (51) entfernt sind.

3. Abklebeprofil nach Anspruch 1 oder 2,
dadurch gekennzeichnet,
daß wenigstens der zum Hintergreifen der Profildichtlippe (21) eingesetzte Profil Schenkel (52) an seinem Ende (9) sich verjüngend ausgebildet ist.

4. Abklebeprofil nach einem der vorangehenden Ansprüche,
dadurch gekennzeichnet,
daß die Profil Schenkel (57,58), ausgehend von der Winkelecke (11), sich zu den freien Enden hin verjüngend ausgebildet sind.

5. Abklebeprofil nach einem der vorangehenden Ansprüche,
dadurch gekennzeichnet,
daß der mit der Klebstoffbeschichtung (6) versehene Profil Schenkel (57) wenigstens 1,2-fach, insbesondere mehr als 3-fach breiter ausgebildet ist als der Profil Schenkel (52).

## Claims

1. Stick-on profile for use in painting operations at the joining region between motor vehicle panels (3) embedded in profiles (2) and the motor vehicle body (1),
characterised in that
the stick-on profile (5) is formed as a short, intrinsically rigid element comprising in cross-section two profile flanges (51, 52) angled with respect to one another in an L-shape, a shorter profile flange (52) for engaging behind the lip (21) - which abuts the body region (1) to be sprayed - of the profile (2) holding the vehicle panel (3), and a longer profile flange (51) with an adhesive coating (6) for adhesion to the outer surface of the vehicle panel (3) and/or to areas of the vehicle body.

2. Stick-on profile according to claim 1,
characterised in that
regions of the profile flange (51) for adhesion are remote.

3. Stick-on profile according to claim 1 or 2,
characterised in that
at least the profile flange (52) used for engaging behind the profile sealing lip (21) tapers at its end (9).

4. Stick-on profile according to one of the preceding claims,
characterised in that
the profile flanges (57, 58), starting from the corner (11), taper towards the free end.

5. Stick-on profile according to one of the preceding claims,
characterised in that
the profile flange (57) provided with an adhesive coating (6'') is at least 1.2 to 3 times wider than the profile flange (52).

## Revendications

1. Profil de décollement conçu pour être utilisé lors de travaux de laquage dans la zone de transition entre des parebrise (3) de véhicules automobiles, encastrés dans des profilés (2), et la carrosserie (1) du véhicule automobile,
caractérisé par le fait
que le profil de décollement (5) est réalisé sous la forme d'un élément court doué de rigidité propre, comprenant deux branches profilées (51, 52) coudées en L l'une par rapport à l'autre en coupe transversale, une branche profilée courte (52) destinée à emprisonner, par-derrière, la lèvre (21) du profilé (2) enchâssant le pare-brise (3) du véhicule, laquelle lèvre est appliquée contre la région (1) de la carrosserie devant être laquée, et une branche profilée (51) plus longue, munie d'un revêtement adhésif (6) en vue du collage sur la surface extérieure du parebrise (3) du véhicule, et/ou sur des surfaces de la carrosserie.

2. Profil de décollement selon la revendication 1,
caractérisé par le fait
que des régions de la branche profilée (51), servant au collage, sont dépouillées.

3. Profil de décollement selon la revendication 1 ou 2,
caractérisé par le fait
qu'au moins la branche profilée (52), utilisée pour emprisonner par-derrière la lèvre profilée d'étanchement (21), est réalisée avec rétrécissement à son extrémité (9).

4. Profil de décollement selon l'une des revendications précédentes,
caractérisé par le fait
que les branches profilées (57, 58) sont réalisées avec rétrécissement en direction des extrémités libres, à partir du coin (11).

5. Profil de décollement selon l'une des revendications précédentes,
caractérisé par le fait
que la branche profilée (57), pourvue du revêtement adhésif (6), est réalisée d'une largeur représentant au moins 1,2 fois, notamment plus de 3 fois celle de la branche profilée (52).
